# EUROPÄISCHE PATENTANMELDUNG

(11) **EP 4 663 617 A2**
(43) Veröffentlichungstag der Anmeldung: **17.12.2025**
(21) Anmeldenummer: 25161022.6
(22) Anmeldetag: 28.02.2025
(51) Int. Cl.: C04B 22/00, C04B 28/00, C04B 28/12, B28B 3/20, B28B 3/22, B28B 3/26, C04B 28/10

(54) **VERFAHREN UND VORRICHTUNG ZUR HERSTELLUNG VON BILDSAM GEFORMTEN, EMISSIONSARMEN BAUSTOFFEN**

(30) Priorität: 29.02.2024 DE 102024000684; 27.05.2024 DE 102024114831
(71) Anmelder: Ceramiqtec e.K., 92521 Schwarzenfeld (DE)
(72) Erfinder: Schäffer, Christian, 92521 Schwarzenfeld (DE); Fabian, Simon, 56203 Höhr-Grenzhausen (DE)
(74) Vertreter: WSL Patentanwälte Partnerschaft mbB

(57) **Zusammenfassung**

Die Erfindung betrifft ein Verfahren zur Herstellung eines geformten Baustoffes, umfassend mindestens ein Tonmineral, bei dem mindestens ein, ein Tonmineral enthaltender Rohstoff mit Ca(OH)₂ gemischt wird, die erhaltene Mischung geformt wird und der erhaltene Formkörper bei Temperaturen unter 120 °C ausgehärtet wird, sowie einen Formkörper und eine Vorrichtung zur Herstellung desselben.

## Beschreibung

Die Erfindung betrifft ein Verfahren zur Herstellung von geformten Baustoffen, sowie einen Formkörper erhältlich durch das Verfahren und eine Vorrichtung zur Durchführung des Verfahrens.

Die Baustoffindustrie hat an den weltweiten Treibhausgas-Emissionen einen Anteil von ca. 7%. Der Hauptteil dieser Emissionen wird durch die Zementindustrie verursacht, doch auch die baukeramische Industrie hat einen erheblichen Beitrag. Ziegel- und Kalksandsteine verursachen insbesondere wegen ihrer energieintensiven Herstellung (Brennen und/oder Autoklavieren) eine hohe CO₂-Emission.

Eine Alternative zu den in der Baukeramik weit verbreiteten Ziegeln, welche mit hohem Energiebedarf und hohen Emissionen hergestellt werden, stellen sogenannte Lehmsteine dar.

Der Nachteil dieses traditionellen Baustoffs ist, dass die Haltbarkeit durch dessen Wasserlöslichkeit sehr eingeschränkt und die Festigkeit relativ gering ist. Dies hat zur Folge, dass Lehmsteine überwiegend als Vollstein gefertigt werden und Lehmsteine mit Lochung nicht sehr verbreitet sind. Durch die Herstellung als Vollstein kann eine höhere Festigkeit erreicht werden. Dabei ist ihre Wärmeleitfähigkeit jedoch vergleichsweise hoch, wodurch diese Lehmsteine schlechter isolieren als vergleichbare, gebrannte Lochziegel. Ferner sind die Einsetzbarkeit von Lehmsteinen aufgrund ihrer ungenügenden Feuchte- und Frostbeständigkeit derzeit begrenzt.

Die Firma Vandersanden aus Belgien vertreibt mit dem Produkt Pirrouet^{®} einen Fassadenstein, der durch Mischen von Resterzeugnissen aus der Stahlindustrie (Carbinox^{®} und Stinox^{®}) mit feinem Sand und anschließender Zugabe von CO₂ hergestellt wird.

Aus der EP 1344757 A2 ist ein biologischer Baustoff bekannt, der dadurch erzeugt wird, dass Ca(OH)₂ mit Wasser und sandhaltiger Erde vermischt, danach in die gewünschte Form gebracht und getrocknet wird. Die sandhaltige Erde soll dabei 50% bis 85% Sand enthalten und das Verhältnis von Ca(OH)₂ zu staubtrockener Erde bei 1:1 bis etwa 1:3,5 liegen.

Gelöschter Kalk oder Ca(OH)₂ ist ein seit dem Altertum bekannter Baustoff. Der Haupteinsatzzweck von Ca(OH)₂ ist die Zubereitung von Mörtel. Kalkmörtel bestehen aus Mischungen von Ca(OH)₂ und Sand.

Aufgabe der Erfindung ist es, ein Verfahren zur Herstellung geformter Baustoffe bereitzustellen, welches umweltfreundlicher ist, bei dem geformten Baustoffe erzeugt werden, die nicht wasserlöslich sind und eine höhere Festigkeit als Lehmsteine aufweisen.

Diese Aufgabe wird gelöst durch ein Verfahren mit den Merkmalen des Anspruch 1.

Vorteilhafte Weiterbildungen sind in den hiervon abhängigen Unteransprüchen gekennzeichnet.

Es ist eine weitere Aufgabe, einen Formkörper zu schaffen, der umweltfreundlich ist, nicht wasserlöslich ist und eine höhere Festigkeit als Lehmsteine besitzt.

Die Aufgabe wird mit einem Formkörper mit den Merkmalen des Anspruch 19 gelöst.

Vorteilhafte Weiterbildungen sind in den hiervon abhängigen Unteransprüchen gekennzeichnet.

Es ist eine weitere Aufgabe eine Vorrichtung zu schaffen, mit der geformte Baustoffe herstellbar sind, welche nicht wasserlöslich sind und eine höhere Festigkeit als Lehmsteine aufweisen.

Die Aufgabe wird mit einer Vorrichtung mit den Merkmalen des Anspruch 22 gelöst.

Vorteilhafte Weiterbildungen sind in den hiervon abhängigen Unteransprüchen gekennzeichnet.

Überraschenderweise wurde gefunden, dass Mischungen aus mindestens einem, ein Tonmineral enthaltenden Rohstoff und Calciumhydroxid (Ca(OH)₂) zu geformten Baustoffen, umfassend mindestens ein Tonmineral mit reduzierter Wasserlöslichkeit und höherer Festigkeit aushärten.

Ferner hat sich gezeigt, dass die Verfestigung in einem überschaubarem Zeitrahmen von 4 - 6 Wochen nur dann hinreichend erfolgt, wenn die Feuchtigkeit im plastisch geformten Formkörper 2 % besser noch 5 % nicht unterschreitet. Sind die Formkörper zu trocken tritt in diesem Zeitrahmen nur eine Verfestigung auf, die weniger als 60 % der erreichbaren Endfestigkeit ausmacht.

Um dies zu erreichen, muss in dem Bereich, in dem die Formkörper zum Aushärten gelagert werden, eine Luftfeuchtigkeit herrschen, die das Trocknen möglichst verlangsamt. Idealerweise beträgt die relative Luftfeuchtigkeit über 35 % besser 50 %.

Die Erfinder haben erkannt, dass auch bei hohen Tonmineral-Gehalten, die eine bildsame Formgebung ermöglichen, ein Abbinden möglich ist. Die Wandstärke darf aber dafür nicht zu groß sein. Nach 60 Tagen erfolgt die Verfestigung nur bis zu einer Tiefe von ca. 2 cm. Das bedeutet, dass nach der Erfindung dünnwandige Baustoffe (Formkörper) hergestellt werden. Hierfür sind bildsame Formgebungsverfahren in besonderer Weise geeignet.

Das Aushärten zu einem geformten Baustoff erfolgt durch die Bildung von CaCO₃, wodurch das gesamte CO₂, das bei der Herstellung von Ca(OH)₂ (Löschkalk) infolge des Kalkbrennens freigesetzt wurde, wieder gebunden wird.

Da das Kalkbrennen zeitlich unabhängig von der Herstellung der geformten Baustoffe, die mindestens ein Tonmineral umfassen, erfolgen kann, lässt sich die dafür erforderliche Energie regenerativ, beispielsweise durch Wind- oder Solarenergie, bereitstellen.

Vorteilhaft ist die Verwendung von Calciumhydroxid, das aus gebranntem Kalk gewonnen wurde, welcher seinerseits mithilfe erneuerbarer Energieträger produziert wurde. Besonders vorteilhaft ist dabei der Einsatz elektrischer Energie.

Da die Verfügbarkeit elektrischer regenerativer Energie unter anderem aus Windkraftanlagen und Photovoltaikanlagen saisonalen und tageszeitlichen Schwankungen unterliegt und zeitweise ein Überschuss an Strom produziert wird, könnte diese überschüssige Energie gezielt für das Kalkbrennen genutzt und hierdurch im Zwischenprodukt gespeichert werden.

Durch die optimale Nutzung erneuerbarer Energien wäre es somit möglich, einen Baustoff herzustellen, der vollständig emissionsneutral ist.

Damit können vollständig emissionsfrei geformte Baustoffe erzeugt werden.

Es ist bevorzugt, dass die Mischung zwischen 5 Gew.-% und 35 Gew.-%, vorzugsweise zwischen 7 Gew.-% und 25 Gew.-% und besonders bevorzugt zwischen 8 Gew.-% und 20 Gew.-%, jeweils bezogen auf die Gesamtmenge der Mischung, Ca(OH)₂ enthält.

Schon geringe Mengen von 5-7 Gew.-% Ca(OH)₂ in der Mischung, umfassend mindestens einen, ein Tonmineral enthaltenden Rohstoff und Ca(OH)₂, führen zu einer erhöhten Festigkeit der geformten Baustoffe. Bereits mit einem Anteil von 8 Gew.-% Ca(OH)₂ in der Mischung, umfassend mindestens einen, ein Tonmineral enthaltenden Rohstoff und Ca(OH)₂, konnten stabile geformte Baustoffe hergestellt werden, die nicht mehr wasserlöslich sind.

Ferner ist es bevorzugt, dass die Mischung mindestens 20 Gew.-%, bezogen auf die Gesamtmenge der Mischung, Tonmineral enthält.

Es ist mehr bevorzugt, dass die Mischung mindestens 25 Gew.-%, noch mehr bevorzugt mindestens 35 Geh.-%, jeweils bezogen auf die Gesamtmenge der Mischung, an Tonmineral enthält.In einer ganz besonders bevorzugten Ausführungsform der Erfindung enthält die Mischung zwischen 30 Gew.-% und 70 Gew.-% und besonders bevorzugt zwischen 35 Gew.-% und 60 Gew.-%, jeweils bezogen auf die Gesamtmenge der Mischung, Tonmineral.

Der mindestens eine, ein Tonmineral enthaltende Rohstoff ist vorzugsweise ausgewählt aus der Gruppe bestehend aus Lehm, Ton, Mergel, Tonmergel, Mergelton, mergeligem Ton, Kaolin und Mischungen daraus.

Lehm ist eine Mischung, die gewöhnlich aus Sand und Tonmineralien besteht, wobei der Anteil an Tonmineralien im Lehm üblicherweise weniger als 50 Gew.-% beträgt.

Ton ist üblicherweise eine Mischung, die neben Sand mehr als 50 Gew.-% Tonmineralien enthält.

Mergel, Tonmergel, Mergelton oder mergeliger Ton bezeichnet Mischungen, die neben Tonmineralien Kalk in unterschiedlichen Mengen enthalten. Der Gehalt an Kalk in diesen Mischungen liegt zwischen 5 und 65 Gew.-%.

Tonmineralien sind di- oder tri-oktaedrische Zwei- oder Dreischichtsilikate, die quellfähig sein können.

Es ist insbesondere bevorzugt, dass das Tonmineral ausgewählt ist aus der Gruppe bestehend aus Kaoliniten, Smektiten, Illiten, Glimmern und Mischungen daraus.

Besonders vorteilhafte Eigenschaften werden bei den geformten Baustoffen erzielt, wenn die Mischung mindestens 25 Gew.-%, bezogen auf die Gesamtmenge der Mischung, eines Tonminerals ausgewählt aus der Gruppe bestehend aus Kaoliniten, Illiten, Glimmern und Mischungen daraus enthält.

Ein besonders bevorzugtes Tonmineral ist Kaolinit. Bei einem hohen Anteil an Kaolinit in der Mischung kann bereits bei einem Gehalt von 8 Gew.-% von Ca(OH)₂ in der Mischung, umfassend mindestens ein Tonmineral und Ca(OH)₂, eine Verdoppelung der Druckfestigkeit im Vergleich zu getrockneten Bausteinen, umfassend mindestens ein Tonmineral aber kein Ca(OH)₂ erzielt werden.

Die Mischung, umfassend mindestens einen, ein Tonmineral enthaltenden Rohstoff und Ca(OH)₂, kann optional ferner einen Zusatzstoff ausgewählt aus der Gruppe bestehend aus Ziegelmehl, gebrannten Ton, Quarzsand, Feldspat, recyceltem Bauschutt, Mineralsand und Mischungen daraus umfassen. Die Menge an Zusatzstoff kann bis zu 70 Gew.-%, bezogen auf die Gesamtmenge der Mischung, betragen. Vorzugsweise beträgt die Menge an Zusatzstoff zwischen 3 und 50 Gew.-%, bezogen auf die Gesamtmenge der Mischung.

Es kann bevorzugt sein, den Gehalt an Sand, insbesondere Quarzsand und/oder Mineralsand, in der Mischung, umfassend mindestens einen, ein Tonmineral enthaltenden Rohstoff und Ca(OH)₂, auf maximal 45 Gew.-% und mehr bevorzugt maximal 40 Gew.-%, jeweils bezogen auf die Gesamtmenge der Mischung, zu begrenzen.

Zur Verbesserung der Festigkeitseigenschaften der geformten Baustoffe, enthaltend mindestens einen, ein Tonmineral enthaltenden Rohstoff, und/oder zur Beschleunigung des gesamten Herstellungsverfahrens kann es vorteilhaft sein, dass die Mischung zwischen 0,1 und 15 Gew.-%, bevorzugt zwischen 0,1 und 10 Gew.-% und ganz besonders bevorzugt zwischen 0,1 und 5 Gew.-%, jeweils bezogen auf die Gesamtmenge der Mischung, eines Additivs ausgewählt aus der Gruppe bestehend aus Calciumsilikaten, Calciumsulfaten, Calciumaluminaten, Casein, Polyvinylacetat, Polyurethan, Methylcellulose, Carboxymethylcellulose, Cellulosefasern, Zellstoff, Altpapier, Pflanzenfasern, Algen, Vulkanasche, Flugasche, Puzzolanen, Alkalisilikaten und Mischungen daraus enthält.

Ferner kann es vorteilhaft sein, dass die Mischung, umfassend mindestens einen, ein Tonmineral enthaltenden Rohstoff und Ca(OH)₂, ferner bis 0,3 Gew.-%, bezogen auf die Gesamtmenge der Mischung, ein Verflüssigungsmittel, vorzugsweise eine Alkaliverbindung und/oder einen sterischen Verflüssiger umfasst.

Es ist ferner bevorzugt, wenn der Mischung, umfassend mindestens einen, ein Tonmineral enthaltenden Rohstoff und Ca(OH)₂, vor der Formgebung kohlensäurehaltiges Wasser zugegeben wird.

Das Aushärten des Formkörpers erfolgt bei Temperaturen unter 120 °C. Es ist insbesondere bevorzugt, dass das Aushärten des Formkörpers bei Raumtemperatur erfolgt.

In einer weiteren bevorzugten Ausführungsform des Verfahrens erfolgt das Aushärten in einem geschlossenen Raum und in diesen Raum werden Kohlendioxid-haltige Gase, Luft oder Abgase aus Verbrennungsprozessen, eingeleitet.

Da die Verfestigung des geformten Baustoffs auf einer Carbonatisierung des Ca(OH)₂s beruht, ist es besonders vorteilhaft den Formkörper, umfassend mindestens einen, ein Tonmineral enthaltenden Rohstoff und Ca(OH)₂, beim Aushärten zusätzlich in Kontakt mit CO₂ zu bringen.

Der Formkörper kann durch bildsame Formgebungsverfahren, vorzugsweise durch Pressen, Walzen oder Streichen in eine Form oder durch Strangpressen (Extrusion), aus der Mischung, umfassend mindestens einen, ein Tonmineral enthaltenden Rohstoff und Ca(OH)₂, hergestellt werden. Besonders vorteilhaft wird der Formkörper mittels Strangpressen (Extrusion) hergestellt. Optional kann der mittels Strangpressens (Extrusion) erhaltene Formkörper anschließend mittels Pressens nachverformt werden.

Der Formkörper kann auch eine Lochung erhalten. Mit Hilfe des erfindungsgemäßen Verfahren können geformte Baustoffe, umfassend mindestens einen, ein Tonmineral enthaltenden Rohstoff, mit Löchern/Lochungen erhalten werden, die im Vergleich zu Vollsteinen eine deutlich bessere Isolierwirkung bei geringeren Gewicht besitzen.

Ein weiterer Gegenstand der Erfindung ist ein geformter Baustoff, erhältlich durch ein Verfahren. Das für das erfindungsgemäße Verfahren Gesagte, gilt *mutatis mutandis* für den geformten Baustoff.

Ein Ton oder Lehm ist ein tonmineralhaltiger Rohstoff, der als Sediment an sekundärer Lagerstätte zu finden ist und selektiv abgebaut, direkt verarbeitet wird. Ein Kaolin ist ein tonmineralhaltiger Rohstoff, der an primärer Lagerstätte (also ohne Sedimentation) zu finden ist und mit den Begleitmineralen des verwitterten Ursprungsgesteins versetzt ist. Kaolin muss vor der Verarbeitung aufbereitet werden (Sedimentation oder Hydrozyklone) um die Begleitminerale (i.d.R. Quarz) zu entfernen.

Kaoline bestehen in der Regel überwiegend aus dem Tonmineral Kaolinit, können aber auch Illite enthalten. Tone und Lehme bestehen in der Regel aus den Tonmineralen Illit/Smektit, Illit/Glimmer und enthalten häufig ebenfalls Kaolinite. Dabei sind Tone in der Regel deutlich feiner als Kaoline und dadurch deutlich weniger permeabel. Beide (Tone und Kaoline) haben bildsame Eigenschaften und können in plastischer Formgebung (Extrusion, Pressen, Drehen) verarbeitet werden.

Erden enthalten in der Regel Tonminerale (ca. 3 % der Erdkruste besteht ohnehin aus Tonmineralen, wobei nur ein Bruchteil technisch nutzbarer Ton oder Lehm ist). Erden sind per se aber keine plastischen Rohstoffe.

Es gibt keinen Ziegelhersteller, der Erde als solches verarbeitet. Vielmehr verarbeiten diese Tone und Lehme (Tone mit einem Quarzgehalt bis 50%, Lehme mit einem Quarzgehalt ca. 50-70%).

Die geplante Patentameldung bezieht sich auch Mauerwerks- oder Dachbildende Lehm und/oder Tonhaltige Formkörper (Dach-, Hintermauer- oder Vormauerziegel).

Diese Formkörper Ziegel werden in der Regel durch plastische Formgebung (Extrusion) erzeugt. Dafür ist ein Anteil an plastischen Rohstoffen (Tone, Lehme, Kaoline) erforderlich. Anders lassen sich diese Massen nicht extrudieren.

Eine Masse ist dann nicht bildsam und (plastisch) verformbar, wenn der Tonmineral-Gehalt zu niedrig wäre. Eine Erhöhungen des Tonmineral-Gehaltes (durch Zugabe von Ton oder Lehm) führt aber dazu, dass die für das Abbinden (Carbonatisierung des Ca(OH)₂) notwendige Gasdurchlässigkeit abnimmt. Mit hohen Sand-Gehalten wäre zwar ein Abbinden in zeitlichem Rahmen möglich, eine plastische Formgebung aber nicht.

Ein nachträgliches Abbinden im Mauerwerk, das für die Festigkeit notwendig wäre, findet nicht mehr in erforderlichem Maße statt. Antike Kalkmörtel sind beispielsweise ein Beispiel für die notwendige ausreichende CO₂-Durchlässigkeit, die zum Abbinden erforderlich ist. Die Kalkmörtel der Burgen im Rheintal sind im Inneren des Mauerwerks nach 500 Jahren noch nicht abgebunden.

Die Erfinder haben festgestellt, dass auch bei hohen Tonmineral-Gehalten, die eine bildsame Formgebung ermöglichen, ein Abbinden möglich ist. Die Wandstärke darf aber dafür nicht zu groß sein. Nach 60 Tagen erfolgt die Verfestigung nur bis zu einer Tiefe von ca. 2cm. Das bedeutet, es ist unerlässlich dünnwandige Baustoffe (Formkörper) zu produzieren.

Dafür ist die bildsame Formgebung die beste Wahl (Löcher in den Ziegeln) so dass die Erfindung sich insbesondere auf dünnwandig geformte Mauerwerks- oder Dach-Formkörper beziehen.

Bei der plastischen Formgebung hat sich herausgestellt, dass sich diese Massen sehr scherverfestigend (dilatant) verhalten sodass bei normalen Presszylinder/Mundstück-Querschnitten eine Formgebung nicht möglich ist, da die Massen im Mundstück steif werden. Um dies zu umgehen, ist eine plastische Formgebung nur möglich, wenn der Verformungsgrad sehr gering ist. Der Querschnitt des Mundstücks im Verhältnis zum Querschnitt des Presszylinder darf das Verhältnis 1:3,5 nicht unterschreiten (z.B. Querschnitt Presskopf 1000 cm² Austrittsquerschnitt Mundstück nicht kleiner als ca. 280cm²). Anders ausgedrückt darf die Verformungsgeschwindigkeit maximal um den Faktor 3,5 bei der Formgebung zunehmen.

Diese Scherverfestigung könnte aber auch genutzt werden, um den Baustoff zu verfestigen. Dazu müssten bewusst hohe Schergeschwindigkeiten erzeugt werden (z.B. Verformung von Dachziegeln in offenen Formen mit zusätzlichen Scheröffnungen).

Das Mundstück 1 ist vor dem Presszylinder 2 montiert, um den extrudierten Strang zu formen. Im Mundstück befinden sich Kerne 3, die die Lochung im Ziegel bei der Extrusion formen. Um den Austrittsquerschnitt im Mundstück möglichst groß zu halten, werden die Kerne hohl ausgeführt, so dass auch im inneren der Kerne 4, Material extrudiert wird. Dieses,lose' Material wird nach der Formung und dem Schneiden z.B. durch Kippen des Ziegels entfernt. Dadurch wird ein möglichst kleines Verhältnis des Mundstückaustritt-Querschnitts zum Presskopf-Querschnitt erreicht.

Die Erfindung wird anhand einer Zeichnung beispielhaft erläutert. Es zeigt dabei:
- Fig. 1:: eine schematische Darstellung eines Presszylinder mit Mundstück in Frontansicht zum Extrudieren eines formbaren Materials;
- Fig. 2:: einen Querschnitt einer Strangpresse mit seitlichen Entlastungsöffnungen zur Steuerung des Materialflusses und Druckreduzierung;
- Fig. 3:: einen Querschnitt einer Strangpresse mit reduziertem Schneckendurchmesser zur gezielten Anpassung der Materialförderung;
- Fig. 4:: einen Querschnitt einer Strangpresse mit seitlicher Wassereinleitung zur gezielten Beeinflussung der Materialkonsistenz beim Extrudieren;
- Fig. 5:: einen Querschnitt einer Strangpresse mit elektrischem Isolationskörper zwischen Mundstück und Presskopf zur dielektrischen Entkopplung.

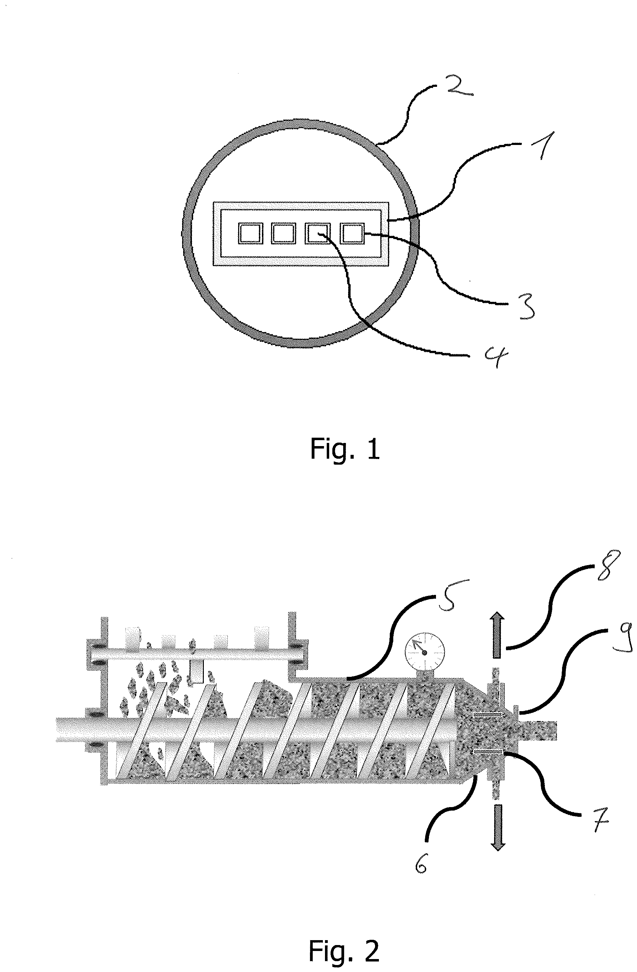

Das in Fig. 1 dargestellte erfindungsgemäße Mundstück 1 ist vor dem Presszylinder 2 angeordnet und dient zur Formgebung eines extrudierten Strangs. Innerhalb des Mundstücks 1 sind mehrere Kerne 3 vorgesehen, welche die Lochungen im extrudierten Material während des Formprozesses erzeugen. Um den Austrittsquerschnitt des Mundstücks 1 möglichst groß zu halten, sind die Kerne 3 hohl ausgeführt, sodass Material auch im Inneren der Kerne 4 extrudiert wird. Dieses lose Material wird nach dem Formungs- und Schneidprozess, beispielsweise durch Kippen des geformten Bauteils, entfernt. Auf diese Weise kann das Verhältnis zwischen dem Mundstückaustrittsquerschnitt und dem Presskopfquerschnitt möglichst klein gehalten werden.

Zur Reduzierung des Verformungsverhältnisses in bestehenden Anlagen oder bei unterschiedlichen Formaten kann, wie im Querschnitt in Fig. 2 dargestellt, dass erfindungsgemäße Presssystem mit Entlastungsöffnungen zwischen dem Presszylinder 5 und dem Presskopf 6 oder zwischen dem Presskopf 6 und dem Mundstück 7 ausgestattet sein. Dies kann im einfachsten Fall dadurch geschehen, dass durch Distanzhalter ein Spalt zwischen diesen Bauteilen ausgebildet wird.

Diese Entlastungsöffnungen ermöglichen dabei den gezielten Austritt der Mischung 8, wodurch lokale Druckspitzen reduziert werden. Die ausgetretene Mischung 8 kann über eine Rückführung wieder in den Pressvorgang integriert und erneut verwendet werden.

Vorteilhafterweise sind im Bereich der Entlastungsöffnungen Leitbleche 9 installiert, welche den Strang in definierte Teilsegmente aufteilen. Dadurch wird eine Querschnittsgeometrie erzeugt, die ein optimales Verhältnis zur Mundstücksfläche aufweist und den Strang homogen formt.

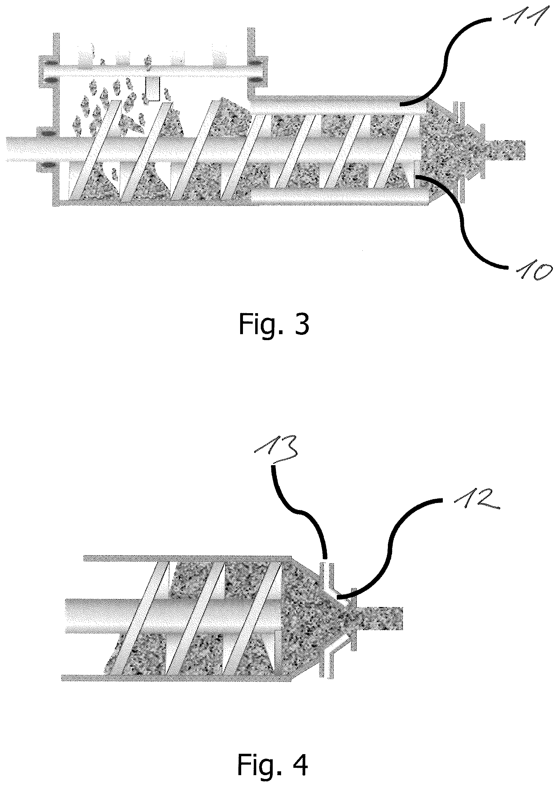

Eine weitere, in Fig. 3 dargestellte Ausführungsform sieht die Verwendung einer Schnecke 10 mit reduziertem Durchmesser vor. Der durch die Verringerung des Schneckendurchmessers entstehende Ringspalt kann durch kreisrunde Formenteile 11 gezielt geschlossen werden. Diese Anpassung ermöglicht eine verbesserte Steuerung des Materialflusses sowie eine homogenere Durchmischung der extrudierten Masse.

Zur Verringerung der Reibung zwischen der Mischung und dem Mundstück kann in das erfindungsgemäße Mundstück, wie in Fig. 4 gezeigt, über ein spaltbildendes Formteil 12 gezielt Wasser 13 eingeleitet werden. Das eingebrachte Wasser bildet einen Flüssigkeitsfilm zwischen der Mischung und der Innenwand des Mundstücks, wodurch die auftretenden Scherkräfte signifikant reduziert werden.

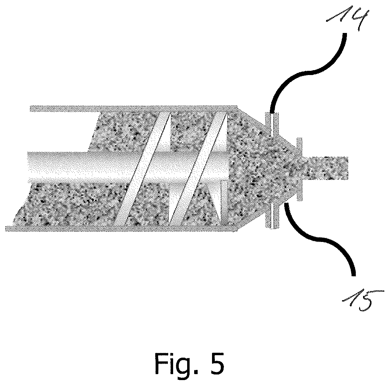

Fig. 5 zeigt eine weitere Möglichkeit zur Reduzierung der Reibung und damit der Scherkräfte zwischen der Mischung und dem Mundstück. Bei dieser wird eine elektrische Isolation 14 des Mundstücks 15 vom Presskopf vorgenommen. Dies wird durch einen Isolator 14 zwischen dem Mundstück und dem Presskopf erreicht.

Das erfindungsgemäße Mundstück kann mit einer elektrischen Gleichspannung im Bereich von 300 V bis 800 V, vorzugsweise zwischen 600 V und 750 V, beaufschlagt werden. In einer bevorzugten Ausführungsform wird der Minuspol an das Mundstück angelegt. Durch die elektrische Potentialdifferenz kann eine gezielte Wechselwirkung mit der Mischung erfolgen, die zur weiteren Verringerung der Reibung und einer verbesserten Extrusion beiträgt.

### Bezugszeichen

- 1: Mundstück
- 2: Presszylinder
- 3: Kerne
- 4: Innenbereich der Kerne
- 5: Presszylinder (Fig. 2)
- 6: Presskopf
- 7: Mundstück (Fig. 2)
- 8: Mischung
- 9: Leitbleche
- 10: Schnecke mit teilreduziertem Durchmesser
- 11: Kreisrunde Formenteile
- 12: Spaltbildendes Formteil
- 13: Wasser
- 14: Isolator
- 15: elektrisch isolierendes Mundstück

## Patentansprüche

1. Verfahren zur Herstellung eines geformten Baustoffes, umfassend mindestens ein Tonmineral, **dadurch gekennzeichnet, dass** mindestens ein Tonmineral enthaltender Rohstoff mit Ca(OH)₂ zu einer plastischen Masse gemischt wird, die erhaltene plastische Masse mit einem bildsamen Formgebungsverfahren geformt wird und der erhaltene Formkörper bei Temperaturen unter 120 °C ausgehärtet wird.

2. Verfahren nach Anspruch 1, **dadurch gekennzeichnet, dass** die Mischung zwischen 5 Gew.-% und 35 Gew.-%, vorzugsweise zwischen 7 Gew.-% und 25 Gew.-% und besonders bevorzugt zwischen 8 Gew.-% und 20 Gew.-%, jeweils bezogen auf die Gesamtmenge der Mischung, Ca(OH)₂ enthält.

3. Verfahren nach einem der vorhergehenden Ansprüche, **dadurch gekennzeichnet, dass** die Mischung vorzugsweise zwischen 20 Gew.-% und 70 Gew.-% und bevorzugt zwischen 25 Gew.-% und 60 Gew.-% und besonders bevorzugt zwischen 35 % und 50 % jeweils bezogen auf die Gesamtmenge der Mischung, Tonmineral enthält.

4. Verfahren nach einem der vorhergehenden Ansprüche, **dadurch gekennzeichnet, dass** das Tonmineral ausgewählt ist aus der Gruppe bestehend aus Kaoliniten, Smektiten, Illiten, Glimmern und Mischungen daraus.

5. Verfahren nach einem der vorhergehenden Ansprüche, **dadurch gekennzeichnet, dass** die Mischung ferner einen Zusatzstoff ausgewählt aus der Gruppe bestehend aus Ziegelmehl, gebrannten Ton, Quarzsand, Feldspat, recyceltem Bauschutt, Mineralsand und Mischungen daraus umfasst.

6. Verfahren nach einem der vorhergehenden Ansprüche, **dadurch gekennzeichnet, dass** die Mischung zwischen 0,1 und 15 Gew.-%, bezogen auf die Gesamtmenge der Mischung, eines Additivs ausgewählt aus der Gruppe bestehend aus Calciumsilikaten, Calciumsulfaten, Calciumaluminaten, Casein, Polyvinylacetat, Polyurethan, Methylcellulose, Carboxymethylcellulose, Cellulosefasern, Zellstoff, Altpapier, Pflanzenfasern, Algen, Vulkanasche, Flugasche, Puzzolanen, Alkalisilikaten und Mischungen daraus enthält.

7. Verfahren nach einem der vorhergehenden Ansprüche, **dadurch gekennzeichnet, dass** der Mischung vor der Formgebung Kohlensäure-haltiges Wasser zugegeben wird.

8. Verfahren nach einem der vorhergehenden Ansprüche, **dadurch gekennzeichnet, dass** das Aushärten in einem geschlossenen Raum erfolgt und in diesen Raum Kohlendioxid-haltige Gase, vorzugsweise Luft oder Abgase aus Verbrennungsprozessen, eingeleitet werden.

9. Verfahren nach einem der Ansprüche 1 bis 7, **dadurch gekennzeichnet, dass** das Aushärten in einem offenen luftdurchströmten Raum oder im Freien erfolgt.

10. Verfahren nach einem der vorhergehenden Ansprüche, **dadurch gekennzeichnet, dass** das bildsame Formgebungsverfahren eines, mehrere oder alle umfasst von: Pressen, Walzen, Streichen in eine Form, Strangpressen (Extrusion).

11. Verfahren nach einem der vorhergehenden Ansprüche, **dadurch gekennzeichnet, dass** der Formkörper so geformt wird, dass seine Wandstärke 6 cm nicht übersteigt, vorzugsweise 5 cm nicht übersteigt, wobei innerhalb des Formkörpers liegenden Innenwandungen vorzugsweise eine Wandstärke von 4 cm nicht übersteigen.

12. Verfahren nach einem der vorhergehenden Ansprüche, **dadurch gekennzeichnet, dass** der Formkörper mittels Strangpressens (Extrusion) hergestellt wird.

13. Verfahren nach einem der vorhergehenden Ansprüche, **dadurch gekennzeichnet, dass** der mittels Strangpressens (Extrusion) erhaltene Formkörper anschließend mittels Pressens nachverformt wird.

14. Verfahren nach einem einem der vorhergehenden Ansprüche, **dadurch gekennzeichnet, dass** der Formkörper eine Lochung (3) erhält.

15. Verfahren nach einem der vorhergehenden Ansprüche, **dadurch gekennzeichnet, dass** zur Vermeidung eines Ansteifens durch Scherverfestigung der plastischen Masse im Mundstück einer Extruderpresse die plastische Formgebung mit einem geringen angepassten Verformungsgrad erfolgt, wobei der Querschnitt des Mundstücks im Verhältnis zum Querschnitt des Presszylinder das Verhältnis 1:3,5 nicht unterschreitet und/oder die Verformungsgeschwindigkeit um den Faktor 3,5 bei der Formgebung zunehmen darf.

16. Verfahren nach Anspruch 15, **dadurch gekennzeichnet, dass** der Verformungsgrad durch eine mehrere oder alle der nachfolgenden Maßnahmen erfolgt: Entlastungsaustritte im Presskopf, Mundstück oder Hohlkerne für Mundstücke.

17. Verfahren nach einem der vorhergehenden Ansprüche, **dadurch gekennzeichnet, dass** zum Erreichen eines möglichst kleinen Verhältnis des Mundstückaustritt-Querschnitts zum Presskopf-Querschnitt das Mundstück welches vor dem Presszylinder montiert ist um den extrudierten Strang zu formen, wobei sich im Mundstück Kerne befinden, die die Lochung im Ziegel bei der Extrusion formen, wobei um den Austrittsquerschnitt im Mundstück möglichst groß zu halten die Kerne hohl ausgeführt werden, so dass auch im Inneren der Kerne Material extrudiert wird, wobei dieses ,lose' Material nach der Formung und dem Schneiden z.B. durch Kippen des Formkörpers entfernt wird.

18. Verfahren nach einem der vorhergehenden Ansprüche, **dadurch gekennzeichnet, dass** die Scherverfestigung der plastischen Masse zur Verfestigung der Masse genutzt wird, indem hohe Schergeschwindigkeiten erzeugt werden, insbesondere durch Verformung von Dachziegeln in offenen Formen mit zusätzlichen Scheröffnungen.

19. Formkörper hergestellt mit einem Verfahren nach einem der vorhergehenden Ansprüche als Mauerwerksformkörper, insbesondere Hintermauer- oder Vormauerziegel, Fassadenverblender, Dachplatte oder Dachziegel.

20. Formkörper nach Anspruch 19, **dadurch gekennzeichnet, dass** er massiv ist oder eine Kammerstruktur aufweist.

21. Formkörper nach Anspruch 19 oder 20, **dadurch gekennzeichnet, dass** die Wandstärke 6 cm und insbesondere 5 cm und bei Innenwänden insbesondere 4 cm nicht übersteigt.

22. Vorrichtung zur Herstellung eines Formkörpers nach einem der Ansprüche 19 bis 21, umfassend einen Presszylinder (2) und ein Mundstück (1), wobei innerhalb des Mundstücks (1) mehrere Kerne (3) angeordnet sind, die eine Lochung im extrudierten Material während des Formprozesses erzeugen.

23. Vorrichtung nach Anspruch 22, **dadurch gekennzeichnet, dass** die Kerne (3) hohl ausgeführt sind, sodass Material auch im Inneren der Kerne (4) extrudiert wird.

24. Vorrichtung nach einem der Ansprüche 22 oder 23, **dadurch gekennzeichnet, dass** das lose extrudierte Material nach dem Formungs- und Schneidprozess durch eine mechanische Bewegung, insbesondere durch Kippen des geformten Bauteils, entfernt wird.

25. Vorrichtung nach einem der Ansprüche 22 bis 24, **dadurch gekennzeichnet, dass** zwischen dem Presszylinder (5) und dem Presskopf (6) oder zwischen dem Presskopf (6) und dem Mundstück (7) Entlastungsöffnungen vorgesehen sind, die einen gezielten Austritt der Mischung (8) ermöglichen.

26. Vorrichtung nach Anspruch 25, **dadurch gekennzeichnet, dass** die ausgetretene Mischung (8) über eine Rückführung wieder in den Pressvorgang integriert wird.

27. Vorrichtung nach einem der Ansprüche 22 bis 26, **dadurch gekennzeichnet, dass** Leitbleche (9) im Bereich der Entlastungsöffnungen angeordnet sind, welche den Strang in definierte Teilsegmente aufteilen, um eine optimale Querschnittsgeometrie in Bezug auf die Mundstückfläche zu erreichen.

28. Vorrichtung nach einem der Ansprüche 22 bis 27, **dadurch gekennzeichnet, dass** die Vorrichtung eine Schnecke (10) mit reduziertem Durchmesser umfasst, wobei der durch die Durchmesserverringerung entstehende Ringspalt durch kreisrunde Formenteile (11) geschlossen wird.

29. Vorrichtung nach einem der Ansprüche 22 bis 28, **dadurch gekennzeichnet, dass** das Mundstück (1) eine Zuführung für Wasser (13) umfasst, die über ein spaltbildendes Formteil (12) das Wasser einleitet, um einen Flüssigkeitsfilm zwischen Mischung und Innenwand des Mundstücks zu erzeugen.

30. Vorrichtung nach einem der Ansprüche 22 bis 29, **dadurch gekennzeichnet, dass** zwischen dem Mundstück (1) und dem Presskopf ein Isolator (14) angeordnet ist, welcher eine elektrische Isolation des Mundstücks (1) vom Presskopf bewirkt.

31. Vorrichtung nach Anspruch 30, **dadurch gekennzeichnet, dass** das Mundstück (1) mit einer elektrischen Gleichspannung im Bereich von 300 V bis 800 V, vorzugsweise zwischen 600 V und 750 V, beaufschlagt wird.
